# EUROPÄISCHE PATENTSCHRIFT

(11) **EP 0 872 788 B1**
(45) Veröffentlichungstag und Bekanntmachung des Hinweises auf die Patenterteilung: **24.07.2002**
(21) Anmeldenummer: 98106994.1
(22) Anmeldetag: 08.04.1998
(51) Int. Cl.: G05D 23/00, G05D 23/13, G05D 23/19, G05D 23/24, H05B 1/00, H05B 1/02, F01K 13/00, F01K 7/16, G01F 1/684

(54) **Steuereinrichtung für eine Heizungs-oder Kälteanlage mit einem Pufferspeicher**
System control for a heating or cooling plant with a buffer memory
Régulation pour un système de chauffage ou de réfrigération avec une mémoire de compensation

(30) Priorität: 14.04.1997 AT 62997
(43) Veröffentlichungstag der Anmeldung: 21.10.1998
(73) Patentinhaber: Siemens Building Technologies AG, 6300 Zug (CH)
(72) Erfinder: Seebacher, Theodor, 5421 Adnet (Salzburg) (AT)
(74) Vertreter: Berg, Peter

(56) Entgegenhaltungen:
- EP-A- 0 149 002
- US-A- 4 455 836
- US-A- 4 817 427

## Beschreibung

Die Erfindung betrifft eine Steuereinrichtung für eine Heizungsanlage bzw. eine Kälteanlage mit einem Pufferspeicher der im Oberbegriff des Anspruchs 1 genannten Art.

Eine solche Steuereinrichtung eignet sich für eine Heizungsanlage, die für die Wärmeerzeugung insbesondere einen Heizkessel für feste Brennstoffe wie Holz oder Kohle aufweist, wobei der Brennstoff manuell zugeführt wird. Der Erzeugerkreis kann aber auch andere Wärmeerzeuger wie Wärmepumpen oder Sonnenkollektoren enthalten. Die Heizungsanlage umfasst weiter einen Pufferspeicher zur Speicherung von Wärmeenergie, damit der Heizkessel für die Warmwasserheizung nicht für den Spitzenbedarf ausgelegt werden muss und damit der Heizkessel nicht in unmittelbarer Abhängigkeit vom jeweiligen Wärmebedarf des Verbraucherkreises betrieben werden muss. Zwischen dem Heizkessel und dem Pufferspeicher ist eine Ladepumpe vorhanden, die das im Heizkessel erhitzte Wasser in den Pufferspeicher befördert, und zwischen dem Pufferspeicher und den Verbrauchern ist eine Verbraucherkreispumpe angeordnet, die das warme oder heisse Wasser vom Pufferspeicher zu den Verbrauchern befördert. Die auf die Heizleistung des Heizkessels abgestimmte Ladepumpe weist eine geringere Förderleistung als die Verbraucherkreispumpe auf.

Ist der Pufferspeicher aufgeladen, so kann dem Pufferspeicher zur Abdeckung eines die Leistung des Heizkessels übersteigenden Wärmebedarfs der Verbraucher aufgrund der dann grösseren Förderleistung der Verbraucherkreispumpe mehr warmes Wasser entnommen werden als dem Pufferspeicher über die Ladepumpe zugeführt wird. Nachteilig bei diesen bekannten Heizungsanlagen ist allerdings, dass für den Fall, dass bei entladenem, d.h. kaltem, Pufferspeicher der Wärmebedarf der Verbraucher hoch ist, wie dies insbesondere bei den manuell mit Brennstoff zu versorgenden Heizkesseln für feste Brennstoffe nach einer nächtlichen Abschaltung immer wieder vorkommt, die volle Leistung des Heizkessels den Verbrauchern erst zur Verfügung steht, wenn der Pufferspeicher wieder aufgeladen ist. Die gegenüber der Ladepumpe grössere Förderleistung der Verbraucherkreispumpe bewirkt nämlich einerseits, dass nebst dem in den Pufferspeicher geförderten warmen Kesselwasser auch kaltes Wasser aus dem Pufferspeicher über den Vorlauf des Verbraucherkreises angesaugt wird, was die maximal mögliche Vorlauftemperatur des Verbraucherkreises beschränkt. Andererseits wird dem Pufferspeicher über den Rücklauf des Verbraucherkreises warmes Wasser zugeführt, so dass sich der Pufferspeicher erwärmt. Dies bedeutet mit anderen Worten, dass ein Teil der vom Heizkessel gelieferten Energie dem Laden des Pufferspeichers dient, auch wenn und obwohl die den Verbrauchern zugeführte Wärmemenge deren Wärmebedarf nicht zu decken vermag. Befindet sich zudem ein Mischventil im Rücklauf des Erzeugerkreises, mit dem dem Rücklauf des Erzeugerkreises heisses Wasser aus der Vorlaufleitung des Erzeugerkreises beigemischt wird, damit die Temperatur des zum Heizkessel zurückgeführten Wassers einen aus Korrosionsgründen einzuhaltenden Minimalwert nicht unterschreitet, dann erhöht sich der Anteil des im Verbraucherkreis zirkulierenden Wassers, das aus dem Pufferspeicher stammt. Diese Nachteile treten naturgemäss nicht nur bei Heizungsanlagen mit einem einzigen Wärmeerzeuger auf, sondern bei allen Heizungsanlagen, die einen Pufferspeicher zur Deckung des Spitzenbedarfs oder einer Lieferlücke aufweisen. Ist der Wärmeerzeuger nämlich eine Wärmepumpe, die vom Elektrizitatswerk zu gewissen Zeiten, beispielsweise über die Mittagszeit, gesperrt wird, dann kann es durchaus sein, dass der Pufferspeicher am Ende der Sperrzeit beinahe entladen ist und dass der Wärmebedarf der Verbraucher die von der Wärmepumpe nach deren Inbetriebnahme bereitgestellte Wärmemenge zunächst übersteigt.

Aus der EP 0 149 002 A1 ist eine Einrichtung zum Regeln einer Verfahrensgrösse eines strömenden Mediums bekannt. Durch eine spezifische Anordnung von Temperaturfühlern und Drosselorganen in einem Verbraucherkreis ohne Pufferspeicher wird es ermöglicht, schnell auf Störungen im Verbraucherkreis zu reagieren.

Der Erfindung liegt die Aufgabe zugrunde, diese Nachteile zu vermeiden und eine Heizungsanlage mit einem Pufferspeicher so zu steuern, dass trotz der Auslegung des jeweils eingesetzten Wärmeerzeugers auf einen durchschnittlichen Wärmebedarf eine rasche Wärmeversorgung der Verbraucher auch bei entladenem Pufferspeicher sichergestellt werden kann.

Die genannte Aufgabe wird erfindungsgemäss gelöst durch die Merkmale der Ansprüche 1 bis 4.

Die Erfindung löst die gestellte Aufgabe mittels einer Steuereinrichtung, die den im Verbraucherkreis zirkulierenden Volumenstrom so drosselt, dass die vom Wärmeerzeuger gelieferte Wärme direkt zu den Verbrauchern gelangt. Dies ist dann der Fall, wenn der Volumenstrom im Verbraucherkreis in etwa gleich dem Volumenstrom im Erzeugerkreis beim Einlass in den Pufferspeicher ist. Der Volumenstrom im Verbraucherkreis am Auslass des Pufferspeichers wird erst dann über den Volumenstrom im Erzeugerkreis erhöht und damit der Pufferspeicher erst dann aufgeladen, wenn der von den Verbrauchern gemeldete Wärmebedarf kleiner als die vom Wärmeerzeuger lieferbare Wärmemenge ist.

Die Steuerung des dem Verbraucherkreis zugeführten Volumenstromes kann auf unterschiedliche Art erfolgen, beispielsweise mittels einer parallel zu den Verbrauchern angebrachten Bypassleitung. In diesem Fall wird die die Fördermenge der Ladepumpe übersteigende Fördermenge der Verbraucherkreispumpe innerhalb des Verbraucherkreises über die Bypassleitung im Kreislauf geführt. Eine andere Möglichkeit besteht darin, als Verbraucherkreispumpe eine drehzahlsteuerbare Pumpe zu verwenden, deren Förderleistung der Förderleistung der Ladepumpe anpassbar ist.

Zur Erfassung der dem Pufferspeicher zugeführten bzw. dem Pufferspeicher entnommenen Volumenströme dienen Messwertgeber, insbesondere Temperatursensoren, die fakultativ mit Durchflussmessern kombiniert sind. Als Durchflussmesser können Durchflussmengenzähler, Wärmezähler oder Differenzdruckgeber verwendet werden. Eine besonders einfache Lösung lässt sich mit Temperatursensoren realisieren. Ist nämlich die Temperatur des dem Pufferspeicher entnommenen Wassers geringer als die Temperatur des dem Pufferspeicher zugeführten Wassers, so bedeutet dies, dass dem Pufferspeicher nicht nur das zugeführte heisse Wasser, sondern auch im Pufferspeicher gespeichertes, kaltes Wasser entnommen wird. Die mit den im Vorlauf des Erzeugerkreises und im Vorlauf des Verbraucherkreises angeordneten Temperatursensoren verbundene Steuereinrichtung drosselt deshalb den im Verbraucherkreis geförderten Volumenstrom, bis die Temperatur des dem Pufferspeicher entnommenen Wassers nur noch um einen endlichen, nahe bei Null liegenden Wert geringer als die Temperatur des dem Pufferspeicher zugeführten Wassers ist. Es wäre zwar wünschenswert, die Temperaturdifferenz auf den Wert Null zu regeln. Dies könnte aber aus regelungstechnischen Gründen dazu führen, dass der im Verbraucherkreis geförderte Volumenstrom mehr als nötig gedrosselt wird.

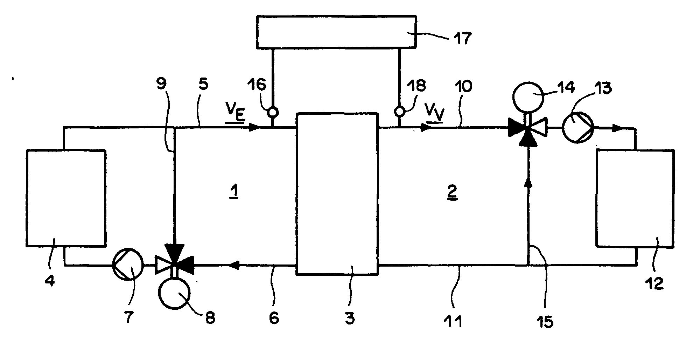

Nachfolgend wird ein Ausführungsbeispiel der Erfindung anhand der Zeichnung näher erläutert. Die einzige Figur zeigt eine Heizungsanlage mit einem Pufferspeicher.

Die Figur zeigt eine Heizungsanlage mit einem Erzeugerkreis 1, einem Verbraucherkreis 2 und einem Pufferspeicher 3. Der Erzeugerkreis 1 umfasst wenigstens einen Wärmeerzeuger 4, sowie eine Vorlaufleitung 5 und eine Rücklaufleitung 6, die den Wärmeerzeuger 4 mit dem Pufferspeicher 3 verbinden. Der Wärmeerzeuger 4 ist vorzugsweise ein Heizkessel für feste Brennstoffe und/oder eine Wärmepumpe und/oder ein Sonnenkollektor. Eine Ladepumpe 7 bewirkt die Beförderung von heissem Wasser vom Wärmeerzeuger 4 zum Pufferspeicher 3. Fakultativ vorhanden sind ein Mischventil 8 und eine dem Wärmeerzeuger 4 parallel geschaltete Bypassleitung 9 in an sich bekannter Anordnung, damit der Rücklaufleitung 6 heisses Wasser aus der Vorlaufleitung 5 beigemischt werden kann. Auf diese Weise kann sichergestellt werden, dass die Temperatur des zum Heizkessel zurückgeführten Wassers einen aus Korrosionsgründen einzuhaltenden Minimalwert nicht unterschreitet.

Der Verbraucherkreis 2 umfasst ebenfalls eine Vorlaufleitung 10 und eine Rücklaufleitung 11, zwischen denen ein einziger oder mehrere Wärmeverbraucher 12 angeordnet sind. Zur Steuerung des Volumenstroms V_{V} durch den Wärmeverbraucher 12 dienen eine drehzahlsteuerbare Verbraucherkreispumpe oder eine Verbraucherkreispumpe 13 mit fester Drehzahl, ein weiteres Mischventil 14 und eine weitere Bypassleitung 15. Die Bypassleitung 15 ist parallel zu den Wärmeverbrauchern 12 geschaltet und verbindet die Vorlaufleitung 10 und die Rücklaufleitung 11.

Bei einer Heizungsanlage ohne die Bypassleitung 9 ist die Förderleistung der Ladepumpe 7 geringer als die Förderleistung der Verbraucherkreispumpe 13. Falls der Rücklaufleitung 6 jedoch über die Bypassleitung 9 und das Mischventil 8 heisses Wasser aus der Vorlaufleitung 5 beigemischt werden kann, kann die Förderleistung der Ladepumpe 7 sogar grösser als die Förderleistung der Verbraucherkreispumpe 13 sein.

In die Vorlaufleitung 5 des Erzeugerkreises 1 ist ein Messwertgeber 16 eingebaut, der die vom Wärmeerzeuger 4 zum Pufferspeicher 3 geförderte Wärmeleistung W_{E} erfasst und an ein Steuer- und Regelgerät 17 meldet. In die Vorlaufleitung 10 des Verbraucherkreises 2 ist ein weiterer Messwertgeber 18 eingebaut, der die dem Pufferspeicher 3 entnommene Wärmeleistung W_{V} erfasst und an das Steuer- und Regelgerät 17 meldet. Die Messwertgeber 16, 18 können direkt am Steuer- und Regelgerät 17 angeschlossen sein. Dem Steuer- und Regelgerät 17 können die Signale der Messwertgeber 16, 18 aber auch über eine Datenleitung (Bus) zugeführt werden. Das Steuer- und Regelgerät 17 steuert oder regelt den Volumenstrom V_{V} entsprechend dem von den Wärmeverbrauchern 12 gemeldeten Wärmebedarf und den von den Messwertgebern 16, 18 gemessenen Wärmeleistungen W_{E} bzw. W_{V}, wie das im folgenden näher erläutert ist.

Nach dem Einschalten des Wärmeerzeugers 4 wird der Pufferspeicher 3 mittels der Ladepumpe 7 geladen. Da die Verbraucherkreispumpe 13 eine grössere Förderleistung als die Ladepumpe 7 aufweist, kann dem Pufferspeicher 3 über die Vorlaufleitung 10 des Verbraucherkreises 2 mehr Wärme entzogen werden, als ihm vom Wärmeerzeuger 4 zugeführt wird. Dies wird zur Abdeckung eines überdurchschnittlichen Wärmebedarfs der Wärmeverbraucher 12 vorteilhaft ausgenützt, indem bei geladenem Pufferspeicher 3 der den durchschnittlichen Wärmebedarf übersteigende Wärmebedarf dem Pufferspeicher 3 entnommen wird. Ist der Pufferspeicher 3 jedoch entladen, wie dies beispielsweise nach einer Abschaltung des Wärmeerzeugers 4 vorkommen kann, so wird ein Teil der vom Wärmeerzeuger 4 gelieferten Wärmeenergie für das Aufladen des Pufferspeichers 3 verwendet, wenn nicht besondere Massnahmen getroffen werden. Damit die volle Wärmeleistung des Wärmeerzeugers 4 den Wärmeverbrauchern 12 zur Verfügung gestellt werden kann, wird erfindungsgemäss der Volumenstrom V_{V} im Verbraucherkreis 2 dem Volumenstrom V_{E} im Erzeugerkreis 1 angeglichen. Dazu reduziert das Steuerund Regelgerät 17 entweder die Drehzahl der Verbraucherkreispumpe 13 (erstes Ausführungsbeispiel mit der drehzahlsteuerbaren Verbraucherkreispumpe) oder bewegt das Mischventil 14 (zweites Ausführungsbeispiel mit der Verbraucherkreispumpe mit fester Drehzahl, dem Mischventil 14 und der Bypassleitung 15) in Öffnungsrichtung, wobei der Volumenstrom durch die Bypassleitung 15 zunimmt, bis die Temperatur T_{V} des dem Pufferspeicher 3 entnommenen Wassers nahezu der Temperatur T_{E} des dem Pufferspeicher 3 zugeführten Wassers entspricht.

Als Messwertgeber 16, 18 werden bevorzugt Temperatursensoren eingesetzt. Der von den Wärmeverbrauchern angeforderte Wärmebedarf liegt bei Heizungsanlagen meistens in Form einer Solltemperatur T_{Soll} vor, was hier nun von Vorteil ist. Ist nun nämlich die Temperatur T_{V} geringer als die Solltemperatur Tₛₒₗₗ, dann bedeutet dies, dass die Wärmeverbraucher nicht mit genügend Wärme versorgt werden. Ist zudem die Temperaturdifferenz ΔT = T_{E} - T_{V} zwischen der Temperatur T_{E} beim Einlass in den Pufferspeicher 3 und der Temperatur T_{V} beim Auslass des Pufferspeichers 3 positiv, d.h. > 0, dann bedeutet dies einerseits, dass dem Volumenstrom V_{V} im Verbraucherkreis 2 ein Anteil an kälterem Wasser aus dem Pufferspeicher 3 beigemischt wird und dass dem Pufferspeicher 3 andererseits warmes Rücklaufwasser aus dem Verbraucherkreis 2 zugeführt wird. Der Pufferspeicher 3 wird also erwärmt, obwohl der Wärmebedarf der Wärmeverbraucher 12 nicht gedeckt wird. Ist also T_{Soll} > T_{V} und T_{E} > T_{V}, dann drosselt das Steuer- und Regelgerät 17 den im Verbraucherkreis 2 geförderten Volumenstrom V_{V}, bis die Temperaturdifferenz ΔT = T_{E} - T_{V} einen endlichen, nahe bei Null liegenden Wert aufweist. Die Regelung auf eine endliche, von Null verschiedene Temperaturdifferenz ΔT bedeutet, dass praktisch das gesamte, vom Wärmeerzeuger 4 gelieferte heisse Wasser in den Verbraucherkreis 2 gelangt. Bei einer Regelung der Temperaturdifferenz ΔT auf den Wert Null hingegen könnte es passieren, dass dem Pufferspeicher 3 viel weniger Wasser entnommen wird, als dem Verbraucherkreis 2 zugeführt wird. In der Folge würden der Pufferspeicher 3 geladen und die Wärmeverbraucher 12 erst nach dem Aufladen des Pufferspeichers 3 ausreichend mit Wärme versorgt, was ja gerade nicht erwünscht ist.

Wenn als Messwertgeber 16, 18 mit Durchflussmessern kombinierte Temperatursensoren eingesetzt werden, dann ist es möglich, den dem Pufferspeicher 3 entnommenen Volumenstrom V_{V} exakt dem dem Pufferspeicher 3 zugeführten Volumenstrom V_{E} anzupassen. Sofern die Beziehungen T_{Soll} > T_{V} und T_{E} > T_{V} erfüllt sind, drosselt das Steuer- und Regelgerät 17 den Volumenstrom V_{V}, bis die von den Durchflussmessern gemessenen Durchflüsse gleich gross sind.

Wenn nun also die Temperaturen T_{E} und T_{V} gleich sind und wenn die Volumenströme V_{E} und V_{V} gleich sind, dann ist die dem Pufferspeicher 3 entnommene Wärmeleistung gleich der dem Pufferspeicher 3 zugeführten Wärmeleistung.

Als Temperatursensor zur Messung der Temperatur T_{E} kann der Temperaturfühler des Wärmeerzeugers 4 verwendet werden. Sofern die Verbraucherkreispumpe 13 drehzahlsteuerbar ist, kann als Temperatursensor zur Messung der Temperatur T_{V} der Temperaturfühler des Wärmeverbrauchers 12 verwendet werden.

Falls der Verbraucherkreis 2 mehr als einen Wärmeverbraucher 12 enthält, dann ist unter der Solltemperatur Tₛₒₗₗ die höchste der von den Wärmeverbrauchern 12 angeforderten Solltemperaturen zu verstehen.

Die Erfindung lässt sich gleichermassen für eine Kühlanlage verwenden, bei der der Pufferspeicher 3 ein Kühlmittel zur Verfügung stellt. Die von den Kälteverbrauchern abzugebende Wärme wird dabei vom Kühlmittel zum Pufferspeicher 3 und von dort zu einem Kälteerzeuger, beispielsweise einer als Kühlvorrichtung wirkenden Wärmepumpe, befördert.

Anstelle von Wasser können auch andere Flüssigkeiten für den Wärme- oder Kältetransport verwendet werden.

## Patentansprüche

1. Steuer- und Regelgerät (17) für eine Heizungsanlage, die wenigstens einen Wärmeerzeuger (4) und einen Pufferspeicher (3) aufweist, wobei vom Wärmeerzeuger (4) erhitztes Wasser mittels einer Ladepumpe (7) vom Wärmeerzeuger (4) zum Pufferspeicher (3) befördert wird und wobei Wasser in einem Verbraucherkreis (2) mittels einer Verbraucherkreispumpe (13) vom Pufferspeicher (3) zu Wärmeverbrauchern (12) befördert wird, **dadurch gekennzeichnet, dass** dem Steuer- und Regelgerät (17) Messwerte von Messwertgebern (16, 18) zuführbar sind, die ein der Wärmeleistung (W_{E}) des dem Pufferspeicher (3) zugeführten Volumenstromes (V_{E}) des Wassers bzw. ein der Wärmeleistung (W_{V}) des dem Pufferspeicher (3) entnommenen Volumenstromes (V_{V}) des Wassers entsprechendes Signal an das Steuer- und Regelgerät (17) abgeben, und dass das Steuer- und Regelgerät (17) den dem Pufferspeicher (3) entnommenen Volumenstrom (V_{V}) nahezu dem dem Pufferspeicher (3) zugeführten Volumenstrom (V_{E}) angleicht, sofern der von den Wärmeverbrauchern (12) angeforderte Wärmebedarf grösser ist als die vom Pufferspeicher (3) abgegebene Wärmeleistung (W_{V}), und sofern die vom Pufferspeicher (3) abgegebene Wärmeleistung (W_{V}) geringer ist als die dem Pufferspeicher (3) zugeführte Wärmeleistung (W_{E}).

2. Steuer- und Regelgerät (17) für eine Heizungsanlage, die wenigstens einen Wärmeerzeuger (4) und einen Pufferspeicher (3) aufweist, wobei vom Wärmeerzeuger (4) erhitztes Wasser mittels einer Ladepumpe (7) vom Wärmeerzeuger (4) zum Pufferspeicher (3) befördert wird und wobei Wasser in einem Verbraucherkreis (2) mittels einer Verbraucherkreispumpe (13) vom Pufferspeicher (3) zu Wärmeverbrauchern (12) befördert wird, **dadurch gekennzeichnet, dass** dem Steuer- und Regelgerät (17) Messwerte von Messwertgebern (16, 18) zuführbar sind, die ein der Temperatur (T_{E}) des dem Pufferspeicher (3) zugeführten Wassers bzw. ein der Temperatur(T_{V}) des dem Pufferspeicher (3) entnommenen Wassers entsprechendes Signal an das Steuer- und Regelgerät (17) abgeben, und dass das Steuer- und Regelgerät (17) den dem Pufferspeicher (3) entnommenen Volumenstrom (V_{V}) nahezu dem dem Pufferspeicher (3) zugeführten Volumenstrom (V_{E}) angleicht, sofern die von den Wärmeverbrauchern (12) angeforderte Temperatur (Tₛₒₗₗ) grösser ist als die Temperatur (T_{V}) des dem Pufferspeicher (3) entnommenen Wassers, und sofern die Temperatur (T_{V}) des dem Pufferspeicher (3) entnommenen Wassers geringer ist als die Temperatur (T_{E}) des dem Pufferspeicher (3) zugeführten Wassers.

3. Steuer- und Regelgerät (17) für eine Kühlanlage, die wenigstens einen Kälteerzeuger und einen Pufferspeicher (3) aufweist, wobei vom Kälteerzeuger gekühltes Wasser mittels einer Ladepumpe (7) vom Kälteerzeuger zum Pufferspeicher (3) befördert wird und wobei Wasser in einem Verbraucherkreis (2) mittels einer Verbraucherkreispumpe (13) vom Pufferspeicher (3) zu Kälteverbrauchern befördert wird, **dadurch gekennzeichnet, dass** dem Steuer- und Regelgerät (17) Messwerte von Messwertgebern (16, 18) zuführbar sind, die ein der Kälteleistung des dem Pufferspeicher (3) zugeführten Volumenstromes (V_{E}) des Wassers bzw. ein der Kälteleistung des dem Pufferspeicher (3) entnommenen Volumenstromes (V_{V}) des Wassers entsprechendes Signal an das Steuer- und Regelgerät (17) abgeben, und dass das Steuer- und Regelgerät (17) den dem Pufferspeicher (3) entnommenen Volumenstrom (V_{V}) nahezu dem dem Pufferspeicher (3) zugeführten Volumenstrom (V_{E}) angleicht, sofern der von den Kälteverbrauchern angeforderte Kältebedarf grösser ist als die vom Pufferspeicher (3) abgegebene Kälteleistung, und sofern die vom Pufferspeicher (3) abgegebene Kälteleistung geringer ist als die dem Pufferspeicher (3) zugeführte Kälteleistung.

4. Steuer- und Regelgerät (17) für eine Kühlanlage, die wenigstens einen Kälteerzeuger und einen Pufferspeicher (3) aufweist, wobei vom Kälteerzeuger gekühltes Wasser mittels einer Ladepumpe (7) vom Kälteerzeuger zum Pufferspeicher (3) befördert wird und wobei Wasser in einem Verbraucherkreis (2) mittels einer Verbraucherkreispumpe (13) vom Pufferspeicher (3) zu Kälteverbrauchern befördert wird, **dadurch gekennzeichnet, dass** dem Steuer- und Regelgerät (17) Messwerte von Messwertgebern (16, 18) zuführbar sind, die ein der Temperatur (T_{E}) des dem Pufferspeicher (3) zugeführten Wassers bzw. ein der Temperatur (T_{V}) des dem Pufferspeicher (3) entnommenen Wassers entsprechendes Signal an das Steuer- und Regelgerät (17) abgeben, und dass das Steuer- und Regelgerät (17) den dem Pufferspeicher (3) entnommenen Volumenstrom (V_{V}) nahezu dem dem Pufferspeicher (3) zugeführten Volumenstrom (V_{E}) angleicht, sofern die von den Kälteverbrauchern (12) angeforderte Temperatur kleiner ist als die Temperatur (T_{V}) des dem Pufferspeicher (3) entnommenen Wassers, und sofern die Temperatur (T_{V}) des dem Pufferspeicher (3) entnommenen Wassers grösser ist als die Temperatur (T_{E}) des dem Pufferspeicher (3) zugeführten Wassers.

5. Steuer- und Regelgerät nach einem der vorhergehenden Ansprüche 1 bis 4, **dadurch gekennzeichnet, dass** es eingerichtet ist, den dem Pufferspeicher (3) entnommenen Volumenstrom (V_{V}) mittels einer drehzahlsteuerbaren Verbraucherkreispumpe (2) zu steuern.

6. Steuer- und Regelgerät nach einem der vorhergehenden Ansprüche 1 bis 4, **dadurch gekennzeichnet, dass** es eingerichtet ist, den dem Pufferspeicher (3) entnommenen Volumenstrom (V_{V}) mittels eines Mischventils (14) zu steuern, mittels dessen der Vorlaufleitung (10) des Verbraucherkreises (2) über eine den Wärmeverbrauchern (12) bzw. Kälteverbrauchern parallel geschaltete Bypassleitung (15) Wasser aus der Rücklaufleitung (11) des Verbraucherkreises (2) zuführbar ist.

## Claims

1. A control and regulating apparatus (17) for a heating installation which has at least one heat producer (4) and a buffer store (3), wherein water heated by the heat producer (4) is conveyed by means of a charging pump (7) from the heat producer (4) to the buffer store (3) and wherein water is conveyed in a consumer circuit (2) by means of a consumer circuit pump (13) from the buffer store (3) to heat consumers (12), **characterised in that** the control and regulating apparatus (17) can be supplied with measurement values from measurement value sensors (16, 18) which deliver to the control and regulating apparatus (17) a signal corresponding to the thermal capacity (W_{E}) of the volume flow (V_{E}) of the water, which is fed to the buffer store (3), or a signal corresponding to the thermal capacity (W_{V}) of the volume flow (V_{V}) of the water, which is taken from the buffer store (3), and that the control and regulating apparatus (17) approximately equates the volume flow (V_{V}) taken from the buffer store (3) to the volume flow (V_{E}) fed to the buffer store (3) if the heat demand required by the heat consumers (12) is greater than the thermal capacity (W_{V}) delivered by the buffer store (3) and if the thermal capacity (W_{V}) delivered by the buffer store (3) is less than the thermal capacity (W_{E}) fed to the buffer store (3).

2. A control and regulating apparatus (17) for a heating installation which has at least one heat producer (4) and a buffer store (3), wherein water heated by the heat producer (4) is conveyed by means of a charging pump (7) from the heat producer (4) to the buffer store (3) and wherein water is conveyed in a consumer circuit (2) by means of a consumer circuit pump (13) from the buffer store (3) to heat consumers (12), **characterised in that** the control and regulating apparatus (17) can be supplied with measurement values from measurement value sensors (16, 18) which deliver to the control and regulating apparatus (17) a signal corresponding to the temperature (T_{E}) of the water which is fed to the buffer store (3) or a signal corresponding to the temperature (T_{V}) of the water which is taken from the buffer store (3), and that the control and regulating apparatus (17) approximately equates the volume flow (V_{V}) taken from the buffer store (3) to the volume flow (V_{E}) fed to the buffer store (3) if the temperature (T_{ref}) required by the heat consumers (12) is higher than the temperature (T_{V}) of the water taken from the buffer store (3) and if the temperature (T_{V}) of the water taken from the buffer store (3) is lower than the temperature (T_{E}) of the water fed to the buffer store (3).

3. A control and regulating apparatus (17) for a refrigerating installation which has at least one refrigerating device and a buffer store (3), wherein water cooled by the refrigerating device is conveyed by means of a charging pump (7) from the refrigerating device to the buffer store (3) and wherein water is conveyed in a consumer circuit (2) by means of a consumer circuit pump (13) from the buffer store (3) to refrigeration consumers, **characterised in that** the control and regulating apparatus (17) can be supplied with measurement values from measurement value sensors (16, 18) which deliver to the control and regulating apparatus (17) a signal corresponding to the refrigeration capacity of the volume flow (V_{E}) of the water, which is fed to the buffer store (3), or a signal corresponding to the refrigeration capacity of the volume flow (V_{V}) of the water, which is taken from the buffer store (3), and that the control and regulating apparatus (17) approximately equates the volume flow (V_{V}) taken from the buffer store (3) to the volume flow (V_{E}) fed to the buffer store (3) if the refrigeration demand required by the refrigeration consumers is greater than the refrigeration capacity delivered by the buffer store (3) and if the refrigeration capacity delivered by the buffer store (3) is less than the refrigeration capacity fed to the buffer store (3).

4. A control and regulating apparatus (17) for a refrigeration installation which has at least one refrigeration device and a buffer store (3), wherein water cooled by the refrigeration device is conveyed by means of a charging pump (7) from the refrigeration device to the buffer store (3) and wherein water is conveyed in a consumer circuit (2) by means of a consumer circuit pump (13) from the buffer store (3) to refrigeration consumers, **characterised in that** the control and regulating apparatus (17) can be supplied with measurement values from measurement value sensors (16, 18) which deliver to the control and regulating apparatus (17) a signal corresponding to the temperature (T_{E}) of the water which is fed to the buffer store (3) or a signal corresponding to the temperature (T_{V}) of the water which is taken from the buffer store (3), and that the control and regulating apparatus (17) approximately equates the volume flow (V_{V}) taken from the buffer store (3) to the volume flow (V_{E}) fed to the buffer store (3) if the temperature required by the refrigeration consumers (12) is lower than the temperature (T_{V}) of the water taken from the buffer store (3) and if the temperature (T_{E}) of the water taken from the buffer store (3) is higher than the water fed to the buffer store (3).

5. A control and regulating apparatus according to one of preceding claims 1 to 4 **characterised in that** it is adapted to control the volume flow (V_{V}) taken from the buffer store (3) by means of a rotary speed-controllable consumer circuit pump (2).

6. A control and regulating apparatus according to one of preceding claims 1 to 4 **characterised in that** it is adapted to control the volume flow (V_{V}) taken from the buffer store (3) by means of a mixing valve (14), by means of which the flow conduit (10) of the consumer circuit (2) can be fed with water from the return conduit (11) of the consumer circuit (2) by way of a bypass conduit (15) connected in parallel with the heat consumers (12) or refrigeration consumers.

## Revendications

1. Appareil de commande et de régulation (17) pour une installation de chauffage qui comprend au moins un générateur de chaleur (4) et un accumulateur tampon (3), dans lequel de l'eau chauffée par le générateur de chaleur (4) est envoyée du générateur de chaleur (4) à l'accumulateur tampon (3) au moyen d'une pompe de charge (7), tandis que, dans un circuit des consommateurs (2), de l'eau est envoyée de l'accumulateur tampon (3) à des consommateurs de chaleur (12) au moyen d'une pompe du circuit des consommateurs (13), **caractérisé en ce qu'**à l'appareil de commande et de régulation (17) peuvent être envoyées des valeurs de mesure issues de capteurs de valeurs de mesure (16, 18) qui envoient respectivement à l'appareil de commande et de régulation (17) un signal qui correspond à la capacité thermique (W_{E}) du débit volumique (V_{E}) de l'eau qui est envoyé à l'accumulateur tampon (3) et un signal qui correspond à la capacité thermique (W_{V}) du débit volumique soutiré de l'accumulateur tampon (3) et **en ce que** l'appareil de commande et de régulation (17) rend le débit volumique soutiré de l'accumulateur tampon (3) presque égal au débit volumique envoyé à l'accumulateur tampon (3) dans la mesure où la demande de chaleur exigée par les consommateurs de chaleur (12) est plus grande que la capacité thermique débitée par l'accumulateur tampon (3) et dans la mesure où la capacité thermique (W_{V}) fournie par l'accumulateur tampon (3) est plus petite que la capacité thermique (W_{V}) fournie à l'accumulateur tampon (3).

2. Appareil de commande et de régulation (17) pour une installation de chauffage qui comprend au moins un générateur de chaleur (4) et un accumulateur tampon (3), dans lequel de l'eau chauffée par le générateur de chaleur (4) est envoyée du générateur de chaleur (4) à l'accumulateur tampon (3) au moyen d'une pompe de charge (7), tandis que, dans un circuit des consommateurs (2), de l'eau est envoyée de l'accumulateur tampon (3) à des consommateurs de chalcur (12) au moyen d'une pompe du circuit des consommateurs (13), **caractérisé en ce qu'**à l'appareil de commande et de régulation (17) peuvent être envoyées des valeurs de mesure issues de capteurs de valeurs de mesure (16, 18) qui envoient respectivement à l'appareil de commande et de régulation (17) un signal qui correspond à la température (T_{E}) de l'eau envoyée à l'accumulateur tampon (3) et un signal qui correspond à la température (T_{V}) de l'eau soutirée de l'accumulateur tampon (3) et **en ce que** l'appareil de commande et de régulation (17) rend le débit d'eau volumique (V_{V}) soutiré de l'accumulateur tampon (3) presque égal au débit volumique (V_{E}) envoyé à l'accumulateur tampon (3) dans la mesure où la température (Tₛₒₗₗ) exigée par les consommateurs de chaleur (12) est plus élevée que la température (T_{V}) de l'eau soutirée de l'accumulateur tampon (3) et dans la mesure où la température (T_{V}) de l'eau soutirée de l'accumulateur tampon (3) est plus basse que la température (T_{E}) de l'eau envoyée à l'accumulateur tampon (3)

3. Appareil de commande et de régulation (17) pour une installation frigorifique qui comprend au moins un générateur de froid et un accumulateur tampon (3), dans lequel de l'eau refroidie par le générateur de froid (4) est envoyée du générateur de froid à l'accumulateur tampon (3) au moyen d'une pompe de charge (7), tandis que, dans un circuit des consommateurs (2), de l'eau est envoyée de l'accumulateur tampon (3) à des consommateurs de froid (12) au moyen d'une pompe du circuit des consommateurs (13), **caractérisé en ce qu'**à l'appareil de commande et de régulation (17) peuvent être envoyées des valeurs de mesure issues de capteurs de valeurs de mesure (16, 18) qui envoient respectivement à l'appareil de commande et de régulation (17) un signal qui correspond à la capacité frigorifique du débit volumique (V_{E}) de l'eau qui est envoyé à l'accumulateur tampon (3) et un signal qui correspond à la capacité frigorifique du débit volumique (V_{V}) de l'eau soutirée de l'accumulateur tampon (3) et **en ce que** l'appareil de commande et de régulation (17) rend le débit volumique (V_{V}) soutiré de l'accumulateur tampon (3) presque égal au débit volumique (V_{V}) envoyé à l'accumulateur tampon (3) dans la mesure où la demande de froid exigée par les consommateurs de froid (12) est plus grande que la capacité frigorifique fournie par l'accumulateur tampon (3) et dans la mesure où la capacité frigorifique fournie par l'accumulateur tampon (3) est plus petite que la capacité frigorifique fournie à l'accumulateur tampon (3).

4. Appareil de commande et de régulation (17) pour une installation frigorifique qui comprend au moins un générateur de froid et un accumulateur tampon (3), dans lequel de l'eau refroidie par le générateur de froid (4) est envoyée du générateur de froid à l'accumulateur tampon (3) au moyen d'une pompe de charge (7), tandis que, dans un circuit des consommateurs (2), de l'eau est envoyée de l'accumulateur tampon (3) à des consommateurs de froid (12) au moyen d'une pompe du circuit des consommateurs (13), **caractérisée en ce qu'**à l'appareil de commande et de régulation (17) peuvent être envoyées des valeurs de mesure issues de capteurs de valeurs de mesure (16, 18) qui envoient respectivement à l'appareil de commande et de régulation (17) un signal qui correspond à la température (T_{E}) de l'eau envoyée à l'accumulateur tampon (3) et un signal qui correspond à la température (T_{V}) de l'eau soutirée de l'accumulateur tampon (3) et **en ce que** l'appareil de commande et de régulation (17) rend le débit volumique (V_{V}) soutiré de l'accumulateur tampon (3) presque égal au débit volumique (V_{E}) envoyé à l'accumulateur tampon (3) dans la mesure où la température (Tₛₒₗₗ) exigée par les consommateurs de froid (12) est plus basse que la température (T_{V}) de l'eau soutirée de l'accumulateur tampon (3) et dans la mesure où la température (T_{V}) de l'eau soutirée de l'accumulateur tampon (3) est plus élevée que la température (T_{E}) de l'eau envoyée à l'accumulateur tampon (3)

5. Appareil de commande et de régulation selon une des revendications précédentes 1 à 4, **caractérisé en ce qu'**il est agencé pour commander le débit volumique (V_{V}) soutiré de l'accumulateur tampon (3) au moyen d'une pompe (2) du circuit des consommateurs pouvant être commandée en vitesse de rotation.

6. Appareil de commande et de régulation selon une des revendications précédentes 1 à 4, **caractérisé en ce qu'**il est agencé pour commander le débit volumique (V_{V}) soutiré de l'accumulateur tampon (3) au moyen d'une soupape mélangeuse (14) à l'aide de laquelle il est possible d'envoyer à la conduite d'arrivée (10) du circuit des consommateurs (2) de l'eau provenant de la conduite de retour (11) du circuit des consommateurs en passant par une conduite de dérivation (15) branchée en parallèle par rapport aux consommateurs de chaleur (12) ou de froid.
